# DEMANDE DE BREVET EUROPEEN

(11) **EP 3 823 114 A1**
(43) Date de publication de la demande: **19.05.2021**
(21) Numéro de dépôt: 19209039.7
(22) Date de dépôt: 14.11.2019
(51) Int. Cl.: H02B 1/28, H02B 13/025

(54) **JOINT D'ÉTANCHÉITÉ ET COFFRET ÉLECTRIQUE COMPRENANT UN TEL JOINT D'ÉTANCHÉITÉ**

(71) Demandeur: Hager Electro GmbH & Co. KG, 66440 Blieskastel (DE)
(72) Inventeur: LOUX, Thierry, 67310 BERGBIETEN (FR); MORIAN, Davy, 67530 BOERSCH (FR)
(74) Mandataire: Cabinet Nuss

(57) **Abrégé**

La présente invention a pour objet un joint d'étanchéité (20) pour coffret électrique comprenant au moins un tronçon de fixation (30) apte à être fixé à une paroi (100) du coffret électrique et au moins un tronçon d'étanchéité (40). Le tronçon de fixation comprend une base (32) reliée au tronçon d'étanchéité (40). Le tronçon d'étanchéité (40) est pourvu, sur tout son pourtour, d'une lèvre d'étanchéité (42) apte à épouser une surface extérieure de la paroi (100).

## Description

L'invention concerne un joint d'étanchéité pour coffret électrique ainsi qu'un coffret électrique comprenant un tel joint d'étanchéité.

De tels coffrets électriques sont normalement destinés à recevoir des appareils de protection électrique tels que des disjoncteurs. Ces coffrets sont en général conçus pour protéger les appareils de protection électrique y installés contre par exemple de l'humidité présente à l'extérieur du coffret.

De tels appareils de protection peuvent dégager des gaz par exemple lors d'une coupure en cas de court-circuit. Ce dégagement de gaz peut ensuite provoquer une surpression à l'intérieur du coffret. En particulier, lorsque le coffret est conçu pour protéger les appareils y installés contre l'humidité extérieure, une telle surpression peut provoquer une déformation du coffret.

Le document DE 20 2013 101 980 U1 divulgue un coffret avec une membrane prévue dans une des parois du coffret. Cette membrane est prévue pour se rompre en cas de surpression à l'intérieur du coffret. Ainsi, une déformation des parois du coffret peut être évitée. Le coffret connu de l'art antérieur présente comme désavantage que la membrane permettant d'évacuer une surpression présente à l'intérieur du coffret n'est utilisable qu'une seule fois et doit être remplacée après chaque surpression.

La présente invention a pour but de proposer un coffret électrique protégé contre les surpressions et présentant une grande durée de vie. Il est également un objet de la présente invention de proposer un coffret électrique étanche par rapport à de l'humidité présente à l'extérieur du coffret et qui présente une protection contre les surpressions présentes à l'intérieur du coffret suite à un déclenchement d'un appareil de protection y installé.

Le joint d'étanchéité selon l'invention comprend au moins un tronçon de fixation apte à être fixé à une paroi du coffret électrique et au moins un tronçon d'étanchéité, le tronçon de fixation comprenant une base reliée au tronçon d'étanchéité, le tronçon d'étanchéité étant pourvu, sur tout son pourtour, d'une lèvre d'étanchéité apte à épouser une surface extérieure de la paroi.

Le joint d'étanchéité selon l'invention empêche l'introduction d'humidité venant de l'extérieur du coffret vers l'intérieur du coffret. Le joint d'étanchéité selon l'invention permet également d'évacuer des gaz en cas de surpression intervenant à l'intérieur du coffret et fait ainsi office d'élément de compensation de différences de pression entre l'intérieur du coffret et l'extérieur du coffret. Le joint d'étanchéité est réutilisable même en cas de surpression intervenant à l'intérieur du coffret.

Selon une possibilité, la base et/ou le tronçon d'étanchéité est/sont apte(s) à recouvrir un orifice du coffret électrique découpé dans la paroi.

L'orifice du coffret électrique découpé dans la paroi du coffret électrique sert à évacuer des gaz en cas de surpression intervenant à l'intérieur du coffret électrique, c'est-à-dire quand la pression présente à l'intérieur du coffret est plus importante que la pression présente à l'extérieur du coffret.

Selon une caractéristique additionnelle possible, le tronçon de fixation et/ou le tronçon d'étanchéité est/sont fabriqué(s) en matériau plastique.

Ces caractéristiques ont pour avantage de permettre une fabrication peu onéreuse du joint d'étanchéité.

Selon une possibilité, le tronçon de fixation est fabriqué en un matériau plus dur que le matériau dans lequel est fabriqué le tronçon d'étanchéité.

Ces caractéristiques permettent, d'une part, d'assurer l'étanchéité du coffret par rapport à l'humidité venant de l'extérieur du coffret et, d'autre part, de permettre la fixation facile du joint d'étanchéité sur la paroi du coffret.

Selon une caractéristique additionnelle possible, le tronçon de fixation comprend un perçage de fixation apte à recevoir une vis de fixation pouvant être vissée dans un trou de fixation présent dans la paroi.

Ces caractéristiques permettent une fixation durable et facile à mettre en œuvre du joint d'étanchéité sur la paroi du coffret.

Selon une alternative, le joint d'étanchéité peut être clipsable sur la paroi du coffret. A cet effet, le tronçon de fixation peut être pourvu d'une languette de clipsage pouvant s'introduire dans une ouverture prévue dans la paroi afin de fixer le joint d'étanchéité sur la paroi.

L'invention a également pour objet un coffret électrique comprenant au moins une paroi et au moins un joint d'étanchéité selon l'invention, le tronçon de fixation du joint d'étanchéité étant fixé à la paroi.

Selon une possibilité, le coffret électrique comporte en outre un orifice découpé dans la paroi.

L'orifice du coffret électrique découpé dans la paroi du coffret électrique sert à évacuer des gaz en cas de surpression intervenant à l'intérieur du coffret électrique, c'est-à-dire quand la pression présente à l'intérieur du coffret est plus importante que la pression présente à l'extérieur du coffret.

Selon une caractéristique additionnelle possible, la paroi comporte un renfoncement et le tronçon de fixation est fixé à une partie de la paroi formant un fond du renfoncement.

Ces caractéristiques additionnelles permettent d'améliorer l'étanchéité du coffret par rapport à l'humidité venant de l'extérieur du coffret.

Selon une possibilité, l'orifice est découpé dans la partie de la paroi formant le fond du renfoncement.

Ces caractéristiques additionnelles permettent davantage d'améliorer l'étanchéité du coffret par rapport à l'humidité venant de l'extérieur du coffret.

Selon une caractéristique additionnelle possible, la lèvre d'étanchéité du joint d'étanchéité épouse la surface extérieure de la partie de paroi formant le fond du renfoncement.

Ces caractéristiques additionnelles permettent davantage d'améliorer l'étanchéité du coffret par rapport à l'humidité venant de l'extérieur du coffret.

Selon une possibilité, la paroi comporte un trou de fixation et le coffret comporte en outre une vis de fixation reçue dans le perçage de fixation et vissée dans le trou de fixation.

Ces caractéristiques permettent une fixation durable et facile à mettre en œuvre du joint d'étanchéité sur la paroi du coffret.

L'invention sera mieux comprise grâce à la description ci-après, qui se rapporte à deux modes de réalisation préférés, donnés à titre d'exemples non limitatifs, et expliqués avec référence aux dessins schématiques annexés, dans lesquels :

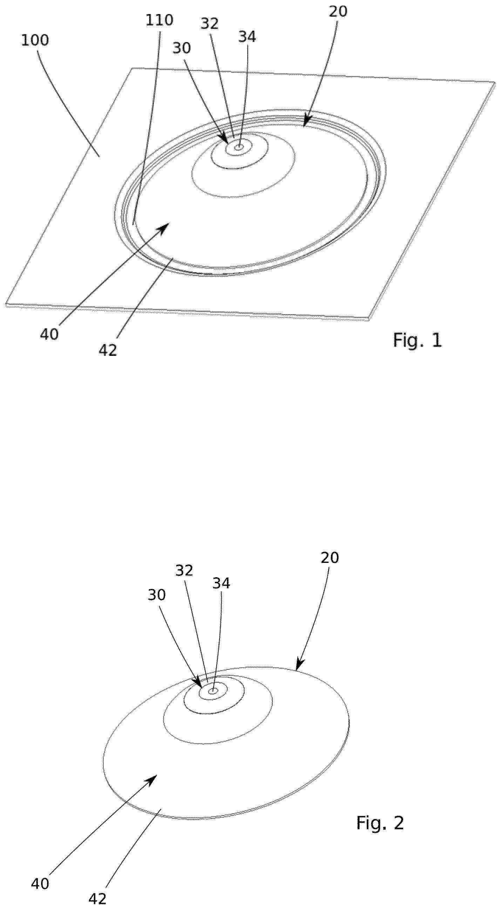

Fig.1 représente une vue en perspective d'un joint d'étanchéité selon la présente demande dans un premier mode de réalisation ;
Fig. 2 représente une vue en perspective du joint d'étanchéité selon le premier mode de réalisation ;
Fig. 3 représente une vue en coupe du joint d'étanchéité selon le premier mode de réalisation ;
Fig. 4 représente une vue en coupe du joint d'étanchéité selon le premier mode de réalisation ;
Fig. 5 représente une vue en coupe du joint d'étanchéité selon le premier mode de réalisation ;
Fig. 6 représente une vue en perspective du joint d'étanchéité selon la présente demande dans un deuxième mode de réalisation ;
Fig. 7 représente une vue en perspective du joint d'étanchéité selon le deuxième mode de réalisation ; et
Fig. 8 représente une vue en coupe du joint d'étanchéité selon le deuxième mode de réalisation.

La présente demande concerne un joint d'étanchéité 20 pour coffret électrique (non représenté dans les figures) ainsi qu'un coffret électrique comprenant un tel joint d'étanchéité 20.

Le joint d'étanchéité 20 selon la présente demande comprend au moins un tronçon de fixation 30 apte à être fixé à une paroi 100 du coffret électrique et au moins un tronçon d'étanchéité 40, le tronçon de fixation comprenant une base 32 reliée au tronçon d'étanchéité 40, le tronçon d'étanchéité 40 étant pourvu, sur tout son pourtour, d'une lèvre d'étanchéité 42 apte à épouser une surface extérieure de la paroi 100.

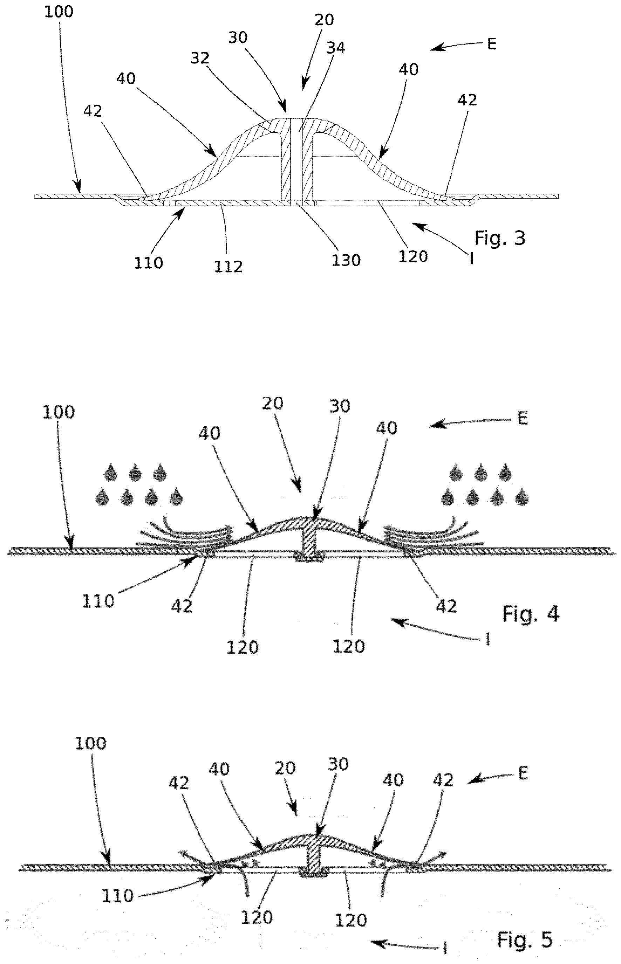

Le joint d'étanchéité 20 selon la présente demande empêche l'introduction d'humidité venant de l'extérieur E du coffret vers l'intérieur I du coffret. Cette fonction d'étanchéité du joint d'étanchéité 20 est par exemple schématisée dans la figure 4.

Le joint d'étanchéité 20 selon la présente demande permet également d'évacuer des gaz en cas de surpression intervenant à l'intérieur I du coffret et fait ainsi office d'élément de compensation de différences de pression entre l'intérieur I du coffret électrique et l'extérieur E du coffret. Le joint d'étanchéité 20 est réutilisable même en cas de surpression intervenant à l'intérieur I du coffret.

Le joint d'étanchéité 20 selon le premier mode de réalisation se présente sous forme essentiellement circulaire et prend la forme d'une tête de champignon ou d'une cloche.

Le joint d'étanchéité 20 selon le deuxième mode de réalisation prend une forme essentiellement allongée et est pourvu de deux parties d'extrémité 22 se présentant chacune sous forme semi-circulaire, entre lesquelles se trouve une partie centrale 24 de forme essentiellement rectangulaire.

La partie centrale 24 peut être variable dans sa longueur L. La variation de la longueur L de la partie centrale 24 permet de faire varier la force d'appui de la lèvre d'étanchéité 42 et ainsi augmenter ou diminuer le seuil d'action, à partir duquel la dépressurisation de l'intérieur I du coffret électrique est enclenchée. Ainsi, le joint d'étanchéité 20 peut être adapté pour tenir compte des différentes pressions générées à l'intérieur I de coffrets électriques de différentes dimensions et/ou de grande ou petite puissance de court-circuit.

La base 32 et/ou le tronçon d'étanchéité 40 peut/peuvent être apte(s) à recouvrir un orifice 120 du coffret électrique découpé dans la paroi 100.

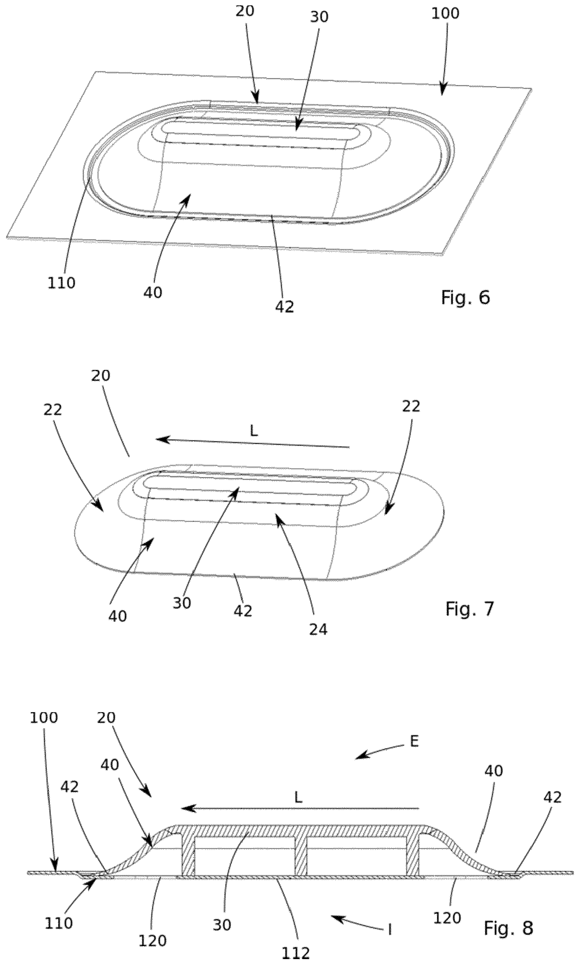

Comme le divulguent en particulier les figures 5 et 8, le tronçon d'étanchéité 40 présente une épaisseur plus faible au niveau de la lèvre d'étanchéité 42. En se rapprochant de l'extrémité de la lèvre d'étanchéité 42, l'épaisseur de la lèvre d'étanchéité 42 diminue.

L'orifice 120 du coffret électrique découpé dans la paroi 100 du coffret électrique sert à évacuer des gaz en cas de surpression intervenant à l'intérieur I du coffret électrique, c'est-à-dire quand la pression présente à l'intérieur I du coffret est plus importante que la pression présente à l'extérieur E du coffret. Une telle situation de surpression est par exemple schématisée dans la figure 5.

En cas de surpression, la lèvre d'étanchéité 42 est détachée de la surface extérieure de la paroi 100. Un espace est créé entre la lèvre d'étanchéité 42 et la surface extérieure de la paroi 100, à travers duquel des gaz peuvent s'échapper de l'intérieur I du coffret vers l'extérieur E du coffret, en passant par l'orifice 120 découpé dans la paroi 100. Cet espace peut être créé sur tout le pourtour du tronçon d'étanchéité 40 au niveau de la lèvre d'étanchéité 42.

Le tronçon de fixation 30 et/ou le tronçon d'étanchéité 40 peut/peuvent être fabriqué(s) en matériau plastique.

Le tronçon de fixation 30 peut être fabriqué en un matériau plus dur que le matériau dans lequel est fabriqué le tronçon d'étanchéité 40. Cette différence de matériau plastique utilisé se manifeste par exemple par un hachurage différent employé dans les figures 3 et 8 pour représenter le tronçon de fixation 30 et le tronçon d'étanchéité 40 du joint d'étanchéité 20.

Le tronçon de fixation 30 peut comprendre un perçage de fixation 34 apte à recevoir une vis de fixation pouvant être vissée dans un trou de fixation 130 présent dans la paroi 100.

De façon alternative, le joint d'étanchéité 20 peut être clipsable sur la paroi 100 du coffret. A cet effet, le tronçon de fixation 30 peut être pourvu d'une languette pouvant s'introduire dans une ouverture prévue dans la paroi 100 afin de fixer le joint d'étanchéité 20 sur la paroi 100.

La présente demande a également pour objet un coffret électrique comprenant au moins une paroi 100 et au moins un joint d'étanchéité 20 selon la présente demande, le tronçon de fixation 30 du joint d'étanchéité 20 étant fixé à la paroi 100.

Le coffret électrique selon la présente demande peut en outre comporter un orifice 120 découpé dans la paroi 100.

L'orifice 120 du coffret électrique découpé dans la paroi 100 du coffret électrique sert à évacuer des gaz en cas de surpression intervenant à l'intérieur I du coffret électrique, c'est-à-dire quand la pression présente à l'intérieur I du coffret est plus importante que la pression présente à l'extérieur E du coffret.

La paroi 100 peut comporter un renfoncement 110 et le tronçon de fixation 30 peut être fixé à une partie de la paroi 100 formant un fond 112 du renfoncement 110.

L'orifice 120 peut être découpé dans la partie de la paroi 100 formant le fond 112 du renfoncement 110.

La lèvre d'étanchéité 42 du joint d'étanchéité 20 peut épouser la surface extérieure de la partie de paroi 100 formant le fond 112 du renfoncement 110.

La paroi 100 peut comporter un trou de fixation 130 et le coffret peut comporter en outre une vis de fixation reçue dans le perçage de fixation 34 et vissée dans le trou de fixation 130.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Joint d'étanchéité pour coffret électrique, comprenant au moins un tronçon de fixation (30) apte à être fixé à une paroi (100) du coffret électrique et au moins un tronçon d'étanchéité (40), le tronçon de fixation comprenant une base (32) reliée au tronçon d'étanchéité (40), le tronçon d'étanchéité (40) étant pourvu, sur tout son pourtour, d'une lèvre d'étanchéité (42) apte à épouser une surface extérieure de la paroi (100).

2. Joint d'étanchéité selon la revendication 1, **caractérisé en ce que** la base (32) et/ou le tronçon d'étanchéité (40) est/sont apte(s) à recouvrir un orifice (120) du coffret électrique découpé dans la paroi (100).

3. Joint d'étanchéité selon l'une quelconque des revendications 1 ou 2, **caractérisé en ce que** le tronçon de fixation (30) et/ou le tronçon d'étanchéité (40) est/sont fabriqué(s) en matériau plastique.

4. Joint d'étanchéité selon l'une quelconque des revendications 1 à 3, **caractérisé en ce que** le tronçon de fixation (30) est fabriqué en un matériau plus dur que le matériau dans lequel est fabriqué le tronçon d'étanchéité (40).

5. Joint d'étanchéité selon l'une quelconque des revendications 1 à 4, **caractérisé en ce que** le tronçon de fixation (30) comprend un perçage de fixation (34) apte à recevoir une vis de fixation pouvant être vissée dans un trou de fixation (130) présent dans la paroi (100).

6. Coffret électrique comprenant au moins une paroi (100) et au moins un joint d'étanchéité (20) selon l'une quelconque des revendications 1 à 5, le tronçon de fixation (30) du joint d'étanchéité (20) étant fixé à la paroi (100).

7. Coffret électrique selon la revendication 6, **caractérisé en ce qu'**il comporte en outre un orifice (120) découpé dans la paroi (100).

8. Coffret électrique selon l'une quelconque des revendications 6 ou 7, **caractérisé en ce que** la paroi (100) comporte un renfoncement (110) et **en ce que** le tronçon de fixation (30) est fixé à une partie de la paroi (100) formant un fond (112) du renfoncement (110).

9. Coffret électrique selon une combinaison des revendications 7 et 8, **caractérisé en ce que** l'orifice (120) est découpé dans la partie de la paroi (100) formant le fond (112) du renfoncement (110).

10. Coffret électrique selon l'une quelconque des revendications 8 ou 9, **caractérisé en ce que** la lèvre d'étanchéité (42) du joint d'étanchéité (20) épouse la surface extérieure de la partie de paroi (100) formant le fond (112) du renfoncement (110).

11. Coffret électrique selon l'une quelconque des revendications 8 ou 9, le joint d'étanchéité (20) étant un joint d'étanchéité (20) selon la revendication 5, **caractérisé en ce que** la paroi (100) comporte un trou de fixation (130) et **en ce que** le coffret comporte en outre une vis de fixation reçue dans le perçage de fixation (34) et vissée dans le trou de fixation (130).
